# EUROPEAN PATENT APPLICATION

(11) **EP 2 568 435 A2**
(43) Date of publication of application: **13.03.2013**
(21) Application number: 12007113.9
(22) Date of filing: 29.09.2009
(51) Int. Cl.: G06T 1/20

(54) **Rendering trimmed NURBs on programmable graphics architectures**

(30) Priority: 30.09.2008 US 286543
(62) Divisional of application: 09252305.9
(71) Applicant: Intel Corporation, Santa Clara, CA 95052 (US)
(72) Inventor: Lake, Adam, Portland, OR 97210 (US); Chumakov, Victor, 603016 Nizhny Novgorod (RU)
(74) Representative: Beresford, Keith Denis Lewis

(57) **Abstract**

Trimmed NURBs may be rendered on a graphics processor rather than on a central processing unit. This may greatly reduce the amount of information that needs to be sent to the graphics processor from the central processing unit, in some embodiments.

## Description

This relates generally to rendering images in processor-based systems.

In order to depict complex geometric shapes, those shapes must be represented in mathematical form. In graphics, splines have a parameter value t that varies from zero to one across a surface. The spline may be represented by an equation that weights neighboring points and describes how to combine them to create a curve segment.

Typically, an entire surface is determined by a combination of splines in three-dimensional space. Thus, a change in one point results in modification of a part of the surface whose size grows proportionally to the degree of the polynomial.

A B-spline is a curved surface representation. A B-spline provides local control and influence for its various control points. B-splines have the same continuity as natural splines, but they do not interpolate their control points. A control point is a vertex in a polygon that is used to represent shapes of geometric images. The B in B-splines stands for "basis" since the B-splines can be represented as weighted sums of polynomial basis functions.

A rational B-spline is a ratio of polynomials. A non-uniform rational B-spline or NURB is characterized by the non-uniform location of so-called knots. The knots are the starting values for the spline parameters along a curved segment. By having successive knot values have the same starting value, the curvature of the surface may be affected at that particular point in space.

If knots are evenly spaced, the surface would be referred to as uniform. Non-uniform in NURB means that the knot positions may not be evenly spaced.

A trimmed non-uniform rational B-spline or trimmed NURB is arrived at by defining curves on the surface of the NURB and cutting holes in the NURB surface. NURBs allow the representation of high fidelity curved geometries used in games, computer aided design, scientific visualization, and movies.

### Brief Description of the Drawings

Figure 1 is a system depiction for one embodiment; and
Figure 2 shows the operations on the central processing unit side and graphics processing unit side in the system of Figure 1 in accordance with one embodiment.

### Detailed Description

In accordance with some embodiments, trimmed NURBs may be generated by a graphics processor. This avoids the need to send complex graphics information back and forth between the central processing unit and the graphics processor. Such transfers use up available bandwidth and make rendering of complex shapes impractical.

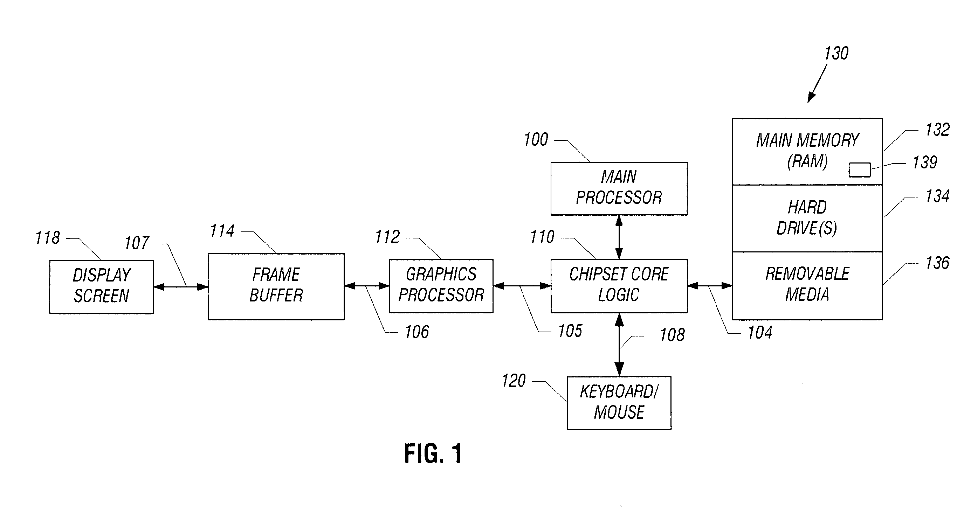

Referring to Figure 1, a typical graphics pipeline provides rendered graphics from a graphics processor 112 over a link 106 to a frame buffer 114 for display via link 107 on a display screen 118. The graphics processor 112 may be coupled by a bus 105, such as a Peripheral Component Interconnect (PCI) bus, to a chipset core logic 110. The graphics processor 112 may be a multicore processor. The core logic 110 is coupled to a main processor or central processing unit (CPU) 100. The central processing unit may be one or more processors that handle a variety of processing functions of a computer system, while the graphics processor is dedicated to graphics functions. The core logic may also be coupled to removable medium 136, hard drives 134, and main memory 132, which may store a program 139. The core logic 110 may be coupled by a link 108 to a keyboard or mouse 120 for control of the display. The program 139 may be made up of instructions that are executed by the processor 100 or the processor 112. Thus, the main memory 132 constitutes one example of a computer readable medium that may store executable instructions in accordance with some embodiments of the present invention.

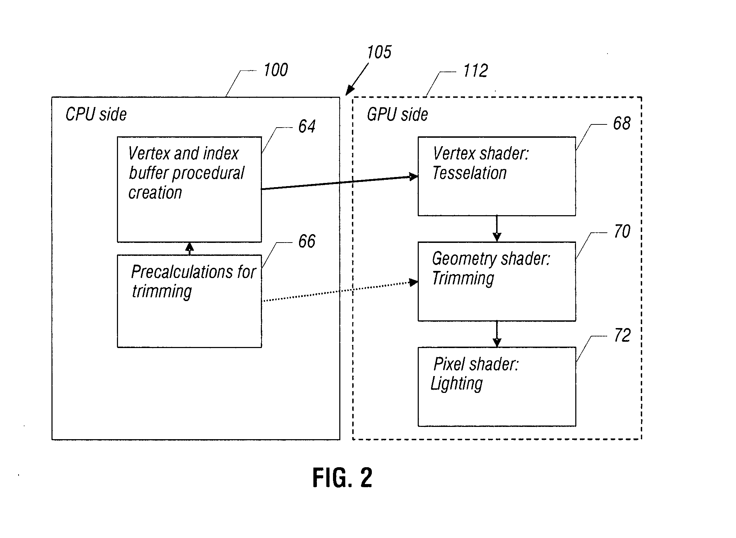

Referring to Figure 2, the operations on the CPU 100 and graphics processor unit 112, via the intervening bus 105, are depicted. Initially, the central processing unit 100 loads in the control points. The control points are the vertices of the polygons that make up the digital image. Then, the processor 100 loads in the trimming curves. The trimming curves are the curves that can be used to trim patches to create curve shapes.

An analogy to a patch is a square piece of paper. The piece of paper can be folded or crumpled, but it is still always a square piece of paper. Folding or crumpling the square piece of paper does not make it round. Instead, if a circle is cut out of the paper square, the piece of paper can be made round.

A NURB is a parametric surface in three-dimensional space. Complex surfaces are made up of patches and each patch is a set of points corresponding to a certain pair of parameters u and v, where both u and v are greater than or equal to zero and less that or equal to one.

So, in parametric space, a patch is equivalent to the square piece of paper. By transferring the parameters u and v into three-dimensional space, the patches are reshaped, but the patches cannot be made round, any more than you can make the piece of paper round by folding it or crumpling it. A patch is made round by trimming.

A cut is made in parametric space and this cut is called a trimming curve (or a trimming circle if the cut is round or a trimming line if the cut is straight). A circular cut generates two surfaces. The first surface is the outside part of the cut (which corresponds to the square piece of paper with a circular hole in it). The second surface is the inside part, which is the disk that is cut out.

Thus, the trimming curves are loaded by the processor 100. The pre-calculations for trimming are also done in the processor 100, as indicated in block 66. In the vertex and index buffer, the vertex and index data is calculated on the fly in the processor 100, as indicated at block 64. The control points and resulting trimming curves are transferred over the bus 105 to the graphics processor 112 and, particularly, to its vertex shader 68.

The graphics processor's vertex shader then does the tessellation of the NURBs using the transferred control points. The vertex shader in block 68 also transforms the vertices. The vertex shader 68 works as follows. The vertex shader does a calculation of a variable, float2 col which is equal to float2 ((float(vertld%g_size))/g_size, (float (vertld/g_size))/g_size). Vertld is the number of the input vertices within the range [0,g_size*g_size]. There are g_size*g_size vertices in total. This number of vertices (vertld) corresponds to the uniform division of [u,v] which is less than or equal to one and greater than or equal to zero in a NURBs parameter space. This step sets up the correspondence between the vertex number and position inside a square.

The next step is float4 res4 equals EvalSurface (col. x, col. y). For a given position inside the square (col) the transformation (u,v) → (x,y,z) is done by evaluation of a point on a NURB surface. The contents of the EvalSurface () function is a well known method of evaluating a point on a surface. The rest of the vertex shader passes input parameters to further stages of the graphics pipeline.

The geometry shader, at block 70, then trims the NURBs using the trimming curves transferred from the central processing unit 100, as also indicated in block 70. To the extent the trimming curves intersect, they are culled along the trim to simplify pieces of the trimming curve obtained by the intersection of two or more trimming segments inside a triangle.

The geometry shader works as follows. First, a vertex normal is computed as follows:
float3 normal = normalize( cross( edge1, edge2) );
If the triangle has to be trimmed as a whole, no output is produced.

If the red (r), green (g), and blue (b) components of the vectors m_trim1 and m_trim2 may contain information about intersections between a trimming curve and adjacent edges to vertices of the processed triangle is determined in the following pseudo code:
if( ( input[0].m_trim1.r ∥ input[0].m_trim1.g ∥ input[0].m_trim1.b ∥
   input[0].m_trim2.r ∥ input[0].m_trim2.g ∥ input[0].m_trim2.b ) &&
   ( input[1].m_trim1.r ∥ input[1].m_trim1.g ∥ input[1].m_trim1.b ∥
   input[1].m_trim2.r ∥ input[1].m_trim2.g ∥ input[1].m_trim2.b ) &&
   ( input[2].m_trim1.r ∥ input[2].m_trim1.g ∥ input[2].m_trim1.b ∥
   input[2].m_trim2.r ∥ input[2].m_trim2.g ∥ input[2].m_trim2.b ) )

Then, all the pairs of vertices are processed to find intersected edges using information about the intersections in the form of the vectors m_trim1 and m_trim2. As a result, an output triangle or quadrangle is produced, depending on how the processed triangle was intersected:
output.m_posPS = input[tri_compl].m_posPS;
output.m_posOS = input[tri_compl].m_posOS;
TriStream.Append( output);
output.m_posPS = input[tri_compl].m_posPS*coefs[0]+input[nbors[0]].m_posPS*coefs[1];
output.m_posOS = input[tri_compl].m_posOS*coefs[0]+input[nbors[0]].m_posOS*coefs[1];
TriStream.Append( output );
output.m_posPS = input[tri_compl].m_posPS*coefs[2]+input[nbors[1]].m_posPS*coefs[3];
output.m_posOS = input[tri_compl].m_posOS*coefs[2]+input[nbors[1]].m_osOS*coefs[3];
TriStream.Append( output );

The result of the above code is an output triangle. One of the vertices of the output triangle is a vertex of the processed triangle (input [tri_compl]). Two other vertices are the points of intersection between the edges of the processed triangles and the trimming curve. In some cases, the processed triangle does not have to be trimmed out as a whole and it does not contain intersection points as processed above. This means that all the vertices are outside the trimmed parts and they just pass through:

```
 {
     output.m_posPS = input[0].m_posPS;
     output.m_posOS = input[0].m_posOS;
     TriStream.Append( output);
     output.m_posPS = input[1].m_posPS;
     output.m_posOS = input[1].m_posOS;
     TriStream.Append( output );
     output.m_posPS = input[2].m_posPS;
     output.m_posOS = input[2].m_posOS;
     TriStream.Append( output );
     }
```

Then, the graphics processor sends these new polygons to the pixel shader 72. The pixel shader rasterizes them and renders them to the display 188.

In some embodiments, geometrical, as opposed to visual, trimming is used. In some embodiments, trimming may be accomplished in a single pass. In one embodiment, control points of a mesh to be tessellated are transferred to the graphics pipeline, as opposed to transferring an entire set of polygons. In some embodiments, the geometry shader performs the trimming or tessellated NURB patch, as opposed to using a neutral processing unit.

The graphics processing techniques described herein may be implemented in various hardware architectures. For example, graphics functionality may be integrated within a chipset. Alternatively, a discrete graphics processor may be used. As still another embodiment, the graphics functions may be implemented by a general purpose processor, including a multicore processor.

References throughout this specification to "one embodiment" or "an embodiment" mean that a particular feature, structure, or characteristic described in connection with the embodiment is included in at least one implementation encompassed within the present invention. Thus, appearances of the phrase "one embodiment" or "in an embodiment" are not necessarily referring to the same embodiment. Furthermore, the particular features, structures, or characteristics may be instituted in other suitable forms other than the particular embodiment illustrated and all such forms may be encompassed within the claims of the present application.

While the present invention has been described with respect to a limited number of embodiments, those skilled in the art will appreciate numerous modifications and variations therefrom. It is intended that the appended claims cover all such modifications and variations as fall within the true spirit and scope of this present invention.

The present disclosure also includes the subject matter set out in the following clauses:

### CLAUSES:

1. A method comprising:
   determining trimmed NURBs in a graphics processor (112);
   loading control points from a central processing unit (100) coupled to said graphics processor (112);
   loading trimming curves from said central processing unit (100); and
   trimming the NURB using trimming curves in a geometry shader (70).
2. The method of clause 1 including transferring said control points and said trimming curves over a bus (105) to said graphics processor (112).
3. The method of clause 1 or clause 2 including using a vertex shader (68) to tessellate a NURB using said control points.
4. The method of clause 3 including using said vertex shader (68) to transform vertices.
5. The method of clause 4 including sending new polygons to the pixel shader (72) and rasterizing them in the pixel shader (72).
6. A graphics processor (112) comprising:
   a geometry shader (70) to trim a NURB patch using a trimming curve; and
   a vertex shader (68) to tessellate the NURB patch using control points.
7. The graphics processor (112) of clause 6 to receive said control points from a central processing unit (100).
8. The graphics processor (112) of clause 7 to receive said trimming curve from said central processing unit (100).
9. The graphics processor (112) of clause 8, said vertex shader (68) to transform vertices.
10. The graphics processor (112) of clause 9, said vertex shader (68) to receive polygons and to rasterize them.
11. A central processing unit (100) comprising:
   a unit (64) for vertex and index buffer to calculate vertex and index data;
   a device (66) to make pre-calculations for trimming; and
   said processor (100) to transfer control points and a trimming curve to a graphics processor (112) for rendering of a NURB.
12. The central processing unit (100) of clause 11 adapted to be coupled to a graphics processor (112) through a chipset core logic (110).
13. A system for rendering images, comprising:
   a graphics processor (112) according to any one of clauses 6 to 10; and
   a central processing unit (100) according to any one of clauses 11 to 12;
   wherein the graphics processor (112) and central processing unit (100) are coupleable.

## Claims

1. A central processing unit (100) comprising:
a vertex and index buffer unit (64) to calculate vertex and index data; and
calculation means (66) to perform pre-calculations for trimming; wherein
said central processing unit (100) is configured to transfer control points and a trimming curve to a graphics processor (112) for rendering a NURB.

2. A system for rendering images, comprising:
a graphics processor (112) having
a geometry shader (70) to trim a NURB patch using a trimming curve; and
a vertex shader (68) to tessellate the NURB patch using control points;
a chipset core logic (110); and
a central processing unit (100), coupled to said graphics processor (112) through said chipset core logic (110), said central processing unit (100) having;
a vertex and index buffer unit (64) to calculate vertex and index data; and
calculation means (66) to perform pre-calculations for trimming; wherein
said central processing unit (100) is arranged to transfer control points and a trimming curve to said graphics processor (112) for rendering the NURB.

3. The system of claim 2 wherein said vertex shader (68) is adapted to transform vertices.

4. The system of claim 3 wherein said vertex shader (68) is adapted to rasterize polygons.
